# EUROPEAN PATENT APPLICATION

(11) **EP 4 545 367 A1**
(43) Date of publication of application: **30.04.2025**
(21) Application number: 23825812.3
(22) Date of filing: 27.02.2023
(51) Int. Cl.: B60S 5/06, B60L 53/80

(54) **AUTOMATIC BATTERY SWAPPING DEVICE AND AGV**

(30) Priority: 23.06.2022 CN 202221615925 U
(71) Applicant: BYD Company Limited, Shenzhen, Guangdong 518118 (CN)
(72) Inventor: WANG, Lipeng, Shenzhen, Guangdong 518118 (CN)
(74) Representative: Taor, Simon Edward William
(86) International application number: PCT/CN2023/078437
(87) International publication number: WO 2023/246153

(57) **Abstract**

An automatic battery swapping device and an AGV. The automatic battery swapping device includes: a device body (10); a thrust assembly (20), the thrust assembly (20) being provided in the device body (10), being movable in the device body (10), and including an attraction member (23), the attraction member (23) being capable of extending out of or retracting into the device body (10), and the attraction member (23) being used for attracting or releasing a battery (71) in the AGV; detection member (30), the detection member (30) being provided in the device body (10) and being used for detecting the position of the attraction member (23) relative to the battery (71) in the AGV; and an adjustment assembly (40), the adjustment assembly (40) being movably provided in the device body (10) and being connected to the thrust assembly (20) to adjust the position of the attraction member (23) relative to the battery (71) in the AGV.

## Description

### CROSS-REFERENCE TO RELATED APPLICATIONS

The present disclosure claims priority to Chinese Patent Application No. 202221615925.3 filed on June 23, 2022, titled "Automatic Battery Swapping Device And AGV", which is incorporated herein by reference in its entirety.

### FIELD

The present disclosure relates to an automatic battery swapping device and an AGV.

### BACKGROUND

AGV vehicle (AGV is the abbreviation of Automated Guided Vehicle, an automatic guided transport vehicle). In the existing technology, there are two methods are usually used when the battery of an AGV vehicle needs to be charged. One is to replace the battery in the AGV vehicle manually, which has high labor costs, low degree of automation, and low battery replacement efficiency. The other method uses an automatic battery swapping device to replace the battery. However, the existing automatic battery swapping device is not provided with a position adjustment mechanism. During the process of taking the battery in the AGV vehicle, the pick-and-place mechanism of the automatic battery swapping device is in contact with the battery. The contact position is prone to deviation, resulting in uneven stress on the pick-and-place mechanism, affecting the efficiency of automatic battery swapping.

### SUMMARY

The present disclosure is intended to provide a new technology proposal relating to an automatic battery swapping device.

According to a first aspect of the present disclosure, an automatic battery swapping device is provided, including: a device body; a thrust assembly, the thrust assembly is provided in the device body, and the thrust assembly is movable in the device body, and the thrust assembly including an attraction member, the attraction member is capable of extending out of or retracting into the device body, and the attraction member is used for attracting or releasing a battery in the AGV; a detection member, the detection member is provided in the device body and the detection member is configured to detect a position of the attraction member relative to the battery in the AGV; an adjustment assembly, the adjustment assembly is movably provided in the device body and the adjustment assembly is connected to the thrust assembly to adjust the position of the attraction member relative to the battery in the AGV.

Optionally, the attraction member is switchable between a first position and a second position, and extends out of the device body when the attraction member is in the first position, so as to be used for attracting the battery in the AGV; and is located in the device body when the attraction member is in the second position, so as to be used for releasing the adsorbed battery.

In an embodiment, the thrust assembly further includes: a first driving member, the first driving member is provided in the device body, is connected to the adjustment assembly; a push rod, one end of the push rod is connected to the first driving member, and the other end of the push rod is connected to the attraction member; the first driving member driving the attraction member through the push rod to switch between the first position and the second position.

In an embodiment, the automatic battery swapping device further includes a battery. The battery is provided in the device body. The attraction member is an electromagnetic chuck. The battery powers the electromagnetic chuck and the electromagnetic chuck produces an adhesive force when the attraction member is in the first position. The battery powers down the electromagnetic chuck and the electromagnetic chuck relieves the adhesive force when the attraction member is in the second position.

In an embodiment, the adjustment assembly includes a first adjustment member. The first adjustment member is connected to the thrust assembly and used for adjusting the position of the attraction member in the first direction. The adjustment assembly also includes a second adjustment member. The second adjustment member is connected to the thrust assembly and used for adjusting the position of the attraction member in the second direction. The first direction is different from the second direction.

In an embodiment, the first adjustment member includes: a second driving member; a screw rod connected to the second driving member; guide rail spaced apart and parallel to the screw rod; a sliding block slidably disposed on the guide rail. The screw rod pass through the sliding block, and the sliding block is connected to the thrust assembly.

In an embodiment, the guide rail extends in a horizontal direction and the sliding block slides in the horizontal direction relative to the guide rail, so as to be used for adjusting the position of the attraction member in the horizontal direction.

In an embodiment, the first adjustment member further includes a plurality of limiting members respectively provided at both ends of the screw rod and respectively provided at both ends of the guide rail.

In an embodiment, the first adjustment member further includes a first encoder provided in the guide rail so as to be used for measuring the movement distance of the sliding block.

In an embodiment, the second adjustment member includes: a third driving member; a fourth driving member spaced apart from the third driving member in the second direction and connected to the thrust assembly; a telescopic rod provided between the third driving member and the fourth driving member. The third driving member drives the telescopic rod to extend out in the second direction, and the fourth driving member drives the telescopic rod to retract in in the second direction, so as to be used for adjusting the position of the thrust assembly in the second direction.

In an embodiment, the third driving member and the fourth driving member are arranged spaced apart in the vertical direction, so as to be used for adjusting the position of the thrust assembly in the vertical direction.

In an embodiment, the second adjustment member further includes a second encoder. The second encoder is a wire encoder, one end of which is connected to the third driving member, and the other is connected to the fourth driving member, so as to be used for measuring the movement distance of the telescopic rod in the second direction.

In an embodiment, the automatic battery swapping device further includes a guide groove provided in the device body, the extension direction of which is the same as the moving direction of the attraction member. The guide groove is used for placing the battery in the AGV, and the battery slides in the guide groove during the process of the attraction member switching between the first position and the second position.

In an embodiment, a plurality of rollers are provided in the guide groove. The rollers are arranged spaced apart in the extension direction of the guide groove.

In an embodiment, the automatic battery swapping device further includes a controller provided in the device body, which is respectively signal-connected to the detection member and the adjustment assembly.

According to a second aspect of the present disclosure, an AGV is provided, which is applied to the automatic battery swapping device described in the above embodiment, including: an vehicle body; a battery, the battery is provided in the vehicle body, and when the attraction member is in the first position, the attraction member extending out of the device body, and attracting the battery; when the attraction member is in the second position, the attraction member is located in the device body and releasing the adsorbed battery; an detection barcode, the detection barcode is provided on the outer wall surface of the battery, and the detection member is used for scanning the detection barcode to obtain the location information of the battery, and the automatic battery swapping device adjusting the position of the attraction member according to the obtained location information of the battery.

One technical effect of the embodiments of the present disclosure is:
Embodiments of the present disclosure provide an automatic battery swapping device. The detection member can detect the position of the attraction member relative to the battery in the AGV, then the adjustment assembly can adjust the position of the attraction member according to the detection result of the detection member, so as to ensure that the attraction part can align with the central area of the battery and balance the stress of the thrust assembly. It is convenient for the thrust assembly to drag the battery to the device body through the attraction member, and perform the battery swap operation to improve the battery swapping efficiency. At the same time, the present disclosure uses an attraction member to attract or release the battery, which is easier to take and is conducive to further improving the battery swapping efficiency.

Other features and advantages of the present disclosure will become apparent from the following detailed description of exemplary embodiments of the present disclosure with reference to the accompanying drawings.

### BRIEF DESCRIPTION OF THE DRAWINGS

The accompanying drawings, which are incorporated in and constitute a part of this specification, illustrate embodiments of the disclosure and together with the description, serve to explain the principles of the disclosure.
FIG. 1 is a schematic structural diagram of the automatic battery swapping device for AGV according to an embodiment of the present disclosure;
FIG. 2 is a schematic structural diagram of a thrust assembly of an automatic battery swapping device according to an embodiment of the present disclosure;
FIG. 3 is a schematic structural diagram of the first adjustment member of the automatic battery swapping device according to an embodiment of the present disclosure;
FIG. 4 is a schematic structural diagram of the second adjustment member of the automatic battery swapping device according to an embodiment of the present disclosure.

Reference signs:
device body 10;
thrust assembly 20; first driving member 21; push rod 22; attraction member 23;
detection member 30;
adjustment assembly 40; first adjustment member 41; second driving member 411; screw rod 412; guide rail 413; sliding block 414; limiting members 415; second adjustment member 42; third driving member 421; fourth driving member 422; telescopic rod 423; second encoder 424;
battery 51; guide groove 52; rollers 53; first wireless transceiver device 54;
vehicle body 60;
battery 71; detection barcode 72; laser navigator 73; reflector 74; second wireless transceiver device 75; vehicle controller 76; backup battery 77; cargo fork 78.

### DETAILED DESCRIPTION

Various exemplary embodiments of the present disclosure will now be described in detail with reference to the accompanying drawings. It should be noted that the relative arrangement of components and steps, numerical expressions, and numerical values set forth in these examples do not limit the scope of the disclosure unless otherwise specifically stated.

The following description of at least one exemplary embodiment is merely illustrative in nature and is in no way intended to limit the disclosure, its application or uses.

Techniques, methods and devices known to those of ordinary skill in the relevant art may not be discussed in detail, but where appropriate, such techniques, methods and devices should be considered a part of the specification.

In all examples shown and discussed herein, any specific values are to be construed as illustrative only and not as limiting. Accordingly, other examples of the exemplary embodiments may have different values.

It should be noted that similar reference numerals and letters refer to similar items in the following figures, so that once an item is defined in one figure, it does not need further discussion in subsequent figures.

Features referred to in the description and claims of the present disclosure that refer to the terms "first" and "second" may include one or more of these features, either explicitly or implicitly. In the description of the present disclosure, "plurality" means two or more unless otherwise specified. In addition, "and/or" in the description and claims indicates at least one of the connected objects, and the character "/" generally indicates that the related objects are in an "or" relationship.

In the description of the present disclosure, if the terms, "center", "longitudinal", "transverse", "length", "width", "thickness", "upper", "lower", "front" and "rear" are used , "Left", "Right", "Vertical", "Horizontal", "Top", "Bottom", "Inside", "Outside", "Clockwise", "Counterclockwise", "Axis", "Diameter", "circumferential direction", etc. are based on the orientation or positional relationship shown in the drawings, it is only for the convenience of describing the present disclosure and simplifying the description, and does not indicate or imply that the device or element referred to must have specific orientations, construction and operation in specific orientations. Therefore the terms should not be construed as limitations on the disclosure.

In the description of the present disclosure, it should be noted that, unless otherwise explicitly stated and limited, the terms "installation," "connection," and "connection" should be understood in a broad sense. For example, it can be a fixed connection, a detachable connection, or an integral connection; it can be a mechanical connection, or it can be an electrical connection; it can be a direct connection, or it can be an indirect connection through an intermediate medium, or it can be an internal connection to two components. For those of ordinary skill in the art, the specific meanings of the above terms in this disclosure can be understood according to specific circumstances.

An automatic battery swapping device provided in the embodiments of the present disclosure is described below with reference to the accompanying drawings.

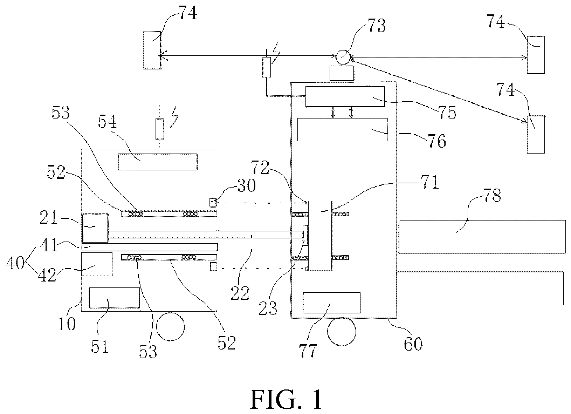

As shown in FIG. 1 to 4, an automatic battery swapping device provided in the embodiments of the present disclosure includes a device body 10, a thrust assembly 20, detection member 30 and an adjustment assembly 40.

Specifically, the thrust assembly 20 is provided in the device body 10 and is movable in the device body 10. The thrust assembly 20 includes an adsorption piece 23 which can extend out or retract into the device body 10. The attraction member 23 is used for attracting or releasing a battery 71 in the AGV. The detection member 30 is provided in the device body 10 and are used for detecting the position of the attraction member 23 relative to the battery 71 in the AGV. The adjustment assembly 40 is movably provided in the device body 10 and is connected to the thrust assembly 20. The adjustment assembly 40 adjusts the position of the attraction member 23 relative to the battery 71 in the AGV according to the detection result of the detection member 30.

In other words, the automatic battery swapping device according to the embodiment of the present disclosure is mainly used for automatic battery swapping of AGV vehicles. AGV is the abbreviation of Automated Guided Vehicle and is an automatic guided transport vehicle. AGV vehicles are transport vehicles equipped with electromagnetic or optical automatic guidance devices that can travel along prescribed guidance paths and have safety protection and various transfer functions. Referring to FIG. 1, when the battery 71 of the AGV vehicle has low power or the power is exhausted, the automatic battery swapping device of the present disclosure can be used for performing automatic battery swapping operations on the AGV vehicle, thereby automating the battery swapping operation, helping to reduce labor costs and improving battery exchange efficiency.

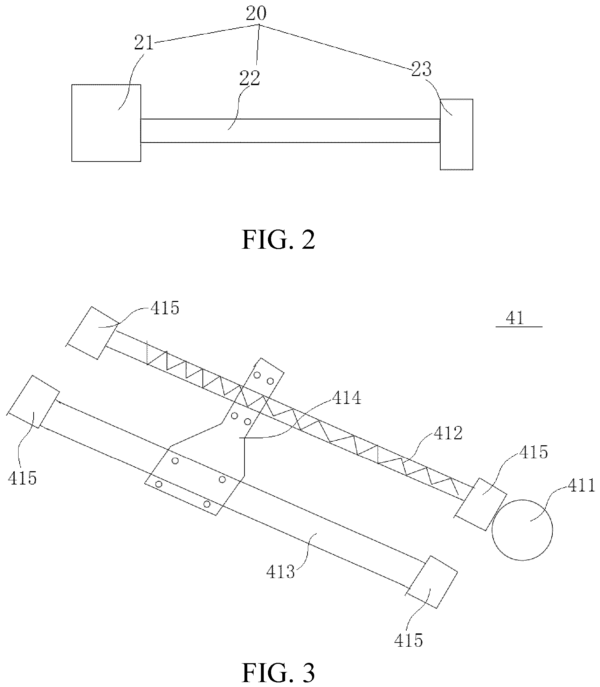

As shown in FIG. 1, the automatic battery swapping device of the present disclosure mainly consists of a device body 10, a thrust assembly 20, detection member 30 and an adjustment assembly 40. Among them, the thrust assembly 20 is installed in the device body 10 and is movable in the device body 10. Referring to FIG. 1 and 2, the thrust assembly 20 includes an attraction member 23 that can extend out or retract into the device body 10. The adsorption piece 23 is mainly used for attracting or releasing the battery 71 in the AGV. During the process of automatic battery swapping, when the attraction member 23 extends out of the device body 10, the attraction member 23 is in the same position as the battery 71 in the AGV. In addition, the attraction member 23 adsorbs the battery 71, and then the attraction member 23 can drag the battery 71 onto the device body 10 during the process of retracting the device body 10. In this case, the adsorption member 23 desorbs the battery 71, and then sends the battery 71 to the charging station for charging through the automatic battery replacement device. In the present disclosure, the attraction member 23 is used to adsorb and desorb the battery 71, which is simpler and more convenient to take, which is beneficial to further improving the battery replacement efficiency.

Referring to FIG. 1 , the detection member 30 is installed in the device body 10 and may be a sensor. The detection member 30 can be used for detecting the position of the attraction member 23 relative to the battery 71 in the AGV. The adjustment assembly 40 is movably installed in the device body 10 and is connected to the thrust component 20. Referring to FIG. 1, the adjustment assembly 40 can adjust the position of the attraction member 23 relative to the battery 71 in the AGV according to the detection results of the detection member 30. Whether the position of the attraction member 23 is centered relative to the battery 71 in the AGV can be determined through the detection member 30. If it is not centered, the position of the attraction member 23 can be adjusted through the adjustment assembly 40 to ensure that the attraction member 23 can be aligned with the central area of the battery 71, so that the stress of the thrust assembly 20 is balanced. It is convenient for the thrust assembly 20 to drag the battery 71 to the device body 10 through the attraction member 23, and perform the battery swap operation to improve the battery swapping efficiency.

Therefore, according to the automatic battery swapping device according to the embodiment of the present disclosure, the detection member 30 can detect the position of the attraction member 23 relative to the battery 71 in the AGV, and the adjustment assembly 40 can adjust the position of the attraction member 23 according to the detection result of the detection member 30, so as to ensure that the attraction member 23 can be aligned with the central area of the battery 71, so that the stress of the thrust assembly 20 is balanced. It is convenient for the thrust assembly 20 to drag the battery 71 to the device body 10 through the attraction member 23, and perform the battery swap operation to improve the battery swapping efficiency. At the same time, the present disclosure uses an attraction member 23 to attract or release the battery 71, which is easier to take and is conducive to further improving the battery swapping efficiency.

According to an embodiment of the present disclosure, the attraction member 23 is switchable between the first position and the second position. When the attraction member 23 is in the first position, it extends out of the device body 10 to be in the same position as the battery 71 in the AGV then attracts the battery 71. When the attraction member 23 is in the second position, it is located in the device body 10 and attracts the battery 71 into the device body 10, then releases the adsorbed battery 71. At this time, the attraction member 23 performs the release on the battery 71, and the battery 71 is sent to the charging station for charging through the automatic battery swapping device. The automatic battery swapping operation is completed.

According to an embodiment of the present disclosure, the thrust assembly 20 further includes a first driving member 21 and a push rod 22.

Specifically, the first driving member 21 is provided in the device body 10, and the adjusting assembly 40 is connected to the first driving member 21. One end of the push rod 22 is connected to the first driving member 21, and the other end of the push rod 22 is connected to the attraction member 23. The first driving member 21 drives the attraction member 23 through the push rod 22 to switch between the first position and the second position.

That is to say, as shown in FIGS. 1 and 2, the thrust assembly 20 further includes a first driving member 21 and a push rod 22, wherein the first driving member 21 is installed in the device body 10 , and the adjusting assembly 40 is connected with the first driving member 21. The first driving member 21 can be a hydraulic cylinder or a pneumatic cylinder. One end of the push rod 22 is connected to the first driving member 21, and the other is connected to the attraction member 23. The first driving member 21 can drive the push rod 22 to extend out or retract into the device body 10 to realize the attraction member 23 switching between the first position and the second position. When the first driving member 21 drives the push rod 22 to extend out of the device body 10, the attraction member 23 attracts the battery 71, and then the first driving member 21 drives the push rod 22 to retract into the device body 10, and then drags the battery 71 from the AGV and retract into the device body 10 through the attraction member 23 to implement the power exchange operation.

In some specific embodiments of the present disclosure, the automatic battery swapping device also includes a battery 51. The battery 51 is provided in the device body 10. The attraction member 23 is an electromagnetic chuck. The battery 51 powers the electromagnetic chuck and the electromagnetic chuck generates an adhesive force when the attraction member 23 is in the first position. The battery 51 powers down the electromagnetic chuck and the electromagnetic chuck relieves the adhesive force when the attraction member 23 is in the second position.

In other words, referring to FIG. 1, the automatic battery swapping device may also include a battery 51. The battery 51 is provided in the device body 10. The attraction member 23 may be an electromagnetic chuck. When the first driving member 21 in the thrust assembly 20 drives the push rod 22 to extend out of the device body 10, the electromagnetic chuck reaches the outer surface of the battery 71 (the attraction member 23 is in the first position). At this time, the automatic battery swapping device controls the battery 51 to supply power to the electromagnetic chuck, so that the electromagnetic chuck generates adhesive force and attract the battery 71. Then the first driving member 21 drives the push rod 22 to retract into the device body 10. During this process, the electromagnetic chuck attracts the battery 71 into the device body 10 (the attraction member 23 is in the second position). At this time, the automatic battery swapping device can control the battery 51 to cut off power to the electromagnetic chuck, and the electromagnetic chuck's adhesive force is released, and the electromagnetic chuck no longer attracts the battery 71. Finally, the battery 71 is sent to the charging station for charging through the automatic battery swapping device.

According to one embodiment of the present disclosure, referring to FIG. 1, the adjustment assembly 40 includes a first adjustment member 41 and the second adjustment member 42. The first adjusting member 41 connected to the thrust assembly 20 can be used to adjust the position of the attraction member 23 in the first direction. The second adjustment member 42 connected to the thrust assembly 20 can be used to adjust the position of the attraction member 23 in the second direction, where the first direction is different from the second direction. The first direction may be a horizontal direction, and the second direction may be a vertical direction. When the detection member 30 detects that there is a position deviation between the attraction member 23 and the battery 71, the position of the attraction member 23 in the horizontal direction and/or the vertical direction can be adjusted through the first adjustment member 41 and/or the second adjustment member 42.

In some embodiments of the present disclosure, the first adjusting member 41 includes a second driving member 411, a screw rod 412, guide rail 413 and a sliding block 414.

Specifically, the screw rod 412 is connected to the second driving member 411, and the guide rail 413 is spaced apart and parallel to the screw rod 412. The sliding block 414 is slidably disposed on the guide rail 413. The screw rod 412 passes through the sliding block 414, and the sliding block 414 is connected to the thrust assembly 20. The guide rail 413 extends in the horizontal direction, and the sliding block 414 slides in the horizontal direction relative to the guide rail 413, so as to adjust the position of the attraction member 23 in the horizontal direction.

That is to say, as shown in FIG. 3, the first adjusting member 41 mainly consists of a second driving member 411, a screw rod 412, guide rail 413 and a sliding block 414 . Among them, the screw rod 412 is connected with the second driving member 411. The guide rail 413 is spaced apart and parallel to the screw rod 412. The sliding block 414 is slidably disposed on the guide rail 413, and the screw rod 412 can pass through the sliding block 414. The sliding block 414 is connected to the thrust assembly 20, and the position of the thrust assembly 20 in the first direction is adjusted by sliding the sliding block 414. The guide rail 413 can extend in the horizontal direction, and the sliding block 414 can slide in the horizontal direction relative to the guide rail 413, so as to adjust the position of the attraction member 23 in the horizontal direction.

The second driving component 411 can be a driver composed of a servo motor and a servo driving component. The screw rod 412 can be a ball screw which has threads. The screw rod 412 is installed on the servo motor. The servo motor drives the screw rod 412 to rotate, converting the rotational motion into linear motion, thereby driving the sliding block 414 to slide linearly along the guide rail 413 to realize the position adjustment of the first adjusting member 41 on the attraction member 23 in the horizontal direction.

In some specific embodiments of the present disclosure, the first adjusting member 41 further includes a plurality of limiting members 415 and a first encoder. The limiting members 415 are respectively provided at both ends of the screw rod 412, and the limiting members 415 are respectively provided at both ends of the guide rail 413. The first encoder is provided on the guide rail 413 to measure the movement distance of the sliding block 414.

In other words, the first adjusting member 41 may also include a plurality of limiting members 415 and a first encoder. As shown in FIG. 3, the limiting members 415 are respectively provided at both ends of the screw rod 412, and the limiting members 415 are respectively provided at both ends of the guide rail 413. The limiting members 415 can be set as a limit block. By setting the limiting members 415, the moving range of the sliding block 414 on the screw rod 412 and the guide rail 413 can be limited, so as to prevent the sliding block 414 from moving out of the screw rod 412 and the guide rail 413. The first encoder can be installed on the guide rail 413, and the first encoder can measure the movement distance of the sliding block 414.

In the present disclosure, the first adjustment member 41 (which can be called a horizontal adjustment member) adopts a structure such as a servo motor plus a ball screw. The servo motor rotates and has threads on the screw which can be mounted on the servo motor to convert the rotating motion into linear motion. The pitch of the screw can be set to 5mm. When the servo motor rotates once, the object mounted on the screw can move 5mm in parallel. The first encoder is installed on the guide rail 413, and the guide rail 413 is parallel to the screw. The first encoder can measure the translation of the thrust assembly 20 on the sliding block 414. The rotation of the servo motor can be controlled by the pulse emitted by the servo driver, for example, with a 5mm lead screw, a turn is 5mm, a turn of 20,000 pulses, that is, a pulse is sent to control 5/20000mm. Then, the servo driver compares the pulses it sends with the actual pulses and controls the servo motor to rotate forward or backward. One end of the sliding block 414 is fixed on the screw, and the other end slides along the guide rail 413, and drives the thrust assembly 20 installed on the sliding block to slide along the guide rail 413, so that the servo motor drives the screw and the thrust assembly 20 on the slider 414 to the left or right to realize the position of the thrust assembly 20.

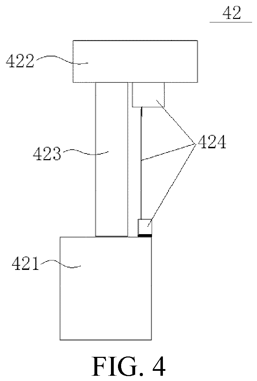

According to an embodiment of the present disclosure, as shown in FIG. 4, the second adjustment member 42 includes a third driving member 421, a fourth driving member 422 and a telescopic rod 423. The fourth driving member 422 and the third driving member 421 are spaced apart in the second direction, and the fourth driving member 422 is connected to the thrust assembly 20. The telescopic rod 423 is installed between the third driving member 421 and the fourth driving part 422. The third driving member 421 drives the telescopic rod 423 to extend out in the second direction, and the fourth driving part 422 drives the telescopic rod 423 to retract in in the second direction. The position of the thrust assembly 20 in the second direction can be adjusted by the extension or retraction of the telescopic rod 423 in the second direction driven by the third drive member 421 and the fourth drive member 422.

In an embodiment, referring to FIG. 4, the third driving member 421 and the fourth driving member 422 are arranged spaced apart in the vertical direction, the fourth driving member 422 is located above the third driving member 421. The third driving member 421 and the fourth driving member 422 can drive the telescopic rod 423 to telescope in the second direction, thereby adjusting the position of the thrust assembly 20 in the vertical direction.

The second adjusting member 42 may also include a second encoder 424. As shown in FIG. 4, the second encoder 424 may be a wire encoder. One end of the second encoder 424 is connected to the third driving member 421, and the other end is connected to the fourth driving member 422. Both the third driving member 421 and the fourth driving member 422 can use hydraulic cylinders or pneumatic cylinders. The second adjusting member 42 can drive the thrust assembly 20 to rise or fall, and the wire encoder can measure the rising or falling height.

According to an embodiment of the present disclosure, referring to FIG. 1, the automatic battery swapping device further includes a guide groove 52, which is provided in the device body 10. The extension direction of the guide groove 52 is the same as the moving direction of the attraction member 23. The guide groove 52 is used for placing the battery 71 in the AGV, and during the process of the attraction member 23 switching between the first position and the second position, the attraction member 23 in the thrust assembly 20 can attract the battery 71 in the AGV to slide along the guide groove 52 to ensure that the battery 71 can move in the set position. A plurality of rollers 53 may be provided in the guide groove 52, and the plurality of rollers 53 may be arranged spaced apart in the extension direction of the guide groove 52. By disposing the roller 53 in the guide groove 52, the sliding efficiency of the battery 71 on the guide groove 52 can be improved. There are two guide grooves 52, which are spaced apart and arranged in parallel. Each guide groove 52 is provided with a plurality of rollers 53. The attraction member 23 can attract the battery 71 to slide along the two guide grooves 52.

According to an embodiment of the present disclosure, the automatic battery swapping device further includes a controller. The controller is provided in the device body 10. The controller is signal-connected to the detection member 30, and the controller is signal-connected to the adjustment assembly 40.

In other words, the automatic power exchange device also includes a controller, which is installed in the device body 10, signal-connected to the detection member 30, and signal-connected to the adjustment assembly 40. During the process of swapping the battery of the automatic battery swapping device, firstly, the detection member 30 (sensors) is used for detecting whether the position of the electromagnetic chuck (attraction member 23) is centered relative to the battery 71. If the attraction member 23 is not centered relative to the battery 71, the detection member 30 can send a signal to the controller to request the horizontal adjustment device (the first adjustment member 41) to move left or right in the horizontal direction until the position of the electromagnetic chuck detected by the detection member 30 is within the error range relative to the horizontal position of the battery 71. If the detection part 30 detects that the position of the electromagnetic chuck is upward or downward relative to the battery 71, a signal can be sent to the control part to request the vertical adjustment device (the second adjustment part 42) to move downward or upward until the position of the electromagnetic chuck detected by the detection member 30 is within the error range relative to the vertical position of the battery 71.

The detector can then calculate the distance between the parked location of the automatic battery swapping device and the surface travel of the battery 71 in the AGV, and send a signal to the controller to control the thrust assembly 20 to extend according to the calculated travel, thereby ensuring that the automatic battery swapping device is accurately docked with the battery 71.

When the thrust assembly 20 pushes the electromagnetic chuck to reach the outer surface of the cover of the battery 71, the controller can control the battery 51 to supply power to the electromagnetic chuck, and the electromagnetic chuck can attract the battery 71. The controller may then request the thrust assembly 20 to pull the battery 71 onto the guide groove 52 in the device body 10. When the battery 71 is pulled to the set position of the guide groove 52, the controller controls the battery 51 to cut off power to the electromagnetic chuck. The electromagnetic chuck release the battery 71, and then the automatic battery swapping device sends the battery 71 to the charging station for charging, so as to realize the battery swapping operation of the automatic battery swapping device.

Of course, for those skilled in the art, the automatic battery swapping device is also equipped with the first wireless transceiver device 54 and other structures, and the working principle of the automatic battery swapping device can be realized, and will not be described in detail in this disclosure.

In summary, according to the automatic battery swapping device of the embodiment of the present disclosure, the detection member 30 can detect the position of the attraction member 23 relative to the battery 71 in the AGV, and the adjustment assembly 40 can adjust the position of the attraction member 23 according to the detection result of the detection member 30, to ensure that the attraction member 23 can be aligned with the central area of the battery 71 and balance the stress of the thrust assembly 20. It is convenient for the thrust assembly 20 to drag the battery 71 to the device body 10 through the attraction member 23, and perform the battery swap operation to improve the battery swapping efficiency. At the same time, the present disclosure uses an attraction member 23 to attract or release the battery 71, which is easier to take and is conducive to further improving the battery swapping efficiency.

According to a second aspect of the present disclosure, an AGV is provided, which is applied to the automatic battery swapping device in the above embodiment. As shown in FIG. 1, the AGV mainly consists of a vehicle body 60, a battery 71 and a detection barcode 72. The battery 71 is provided in the vehicle body 60. When the attraction member 23 is in the first position, the attraction member 23 in the thrust assembly 20 can extend out of the device body 10 and attract the battery 71. When the attraction member 23 is in the second position, the attraction member 23 is located in the device body 10, and the attraction member 23 release the adsorbed battery 71. The detection barcode 72 is provided on the surrounding edges of the outer wall surface of the battery 71. The detection member 30 is used to scan the detection barcode 72 to obtain the position of the battery 71. The automatic battery swapping device adjusts the position of the attraction member 23 according to the obtained location information of the battery 71.

Referring to FIG. 1, the AGV vehicle also includes a second wireless transceiver device 75, a laser navigator 73, a reflector 74, a vehicle controller 76, a backup battery 77, a cargo fork 78 and other structures. From the perspective of battery power in AGV, when the battery 71 needs to be swapped, the AGV can be navigated through the laser navigator 73 to the corresponding coordinate point of the automatic battery replacement device and open the cover so that the battery 71 faces the attraction member 23. The detection member 30 on the automatic battery swapping device has a detection barcode 72 on the surrounding edges of the battery 71 to detect whether the position of the electromagnetic chuck (the attraction member 23) is centered relative to the battery 71. If the attraction member 23 is not centered relative to the battery 71, the detection member 30 can send a signal to the controller to request the horizontal adjustment device (the first adjustment component 41) to move left or right in the horizontal direction until the position of the electromagnetic chuck detected by the detection member 30 is within an error range relative to the horizontal position of the battery 71. If the detection part 30 detects that the position of the electromagnetic chuck is upward or downward relative to the battery 71, a signal can be sent to the control part to request the vertical adjustment device (the second adjustment part 42) to move downward or upward until the position of the electromagnetic chuck detected by the detection member 30 is within the error range relative to the vertical position of the battery 71.

Then, the detector can then calculate the distance between the parked location of the automatic battery swapping device and the surface travel of the battery 71 in the AGV, and send a signal to the controller to control the thrust assembly 20 to extend according to the calculated travel, thereby ensuring that the automatic battery swapping device and the battery 71 are accurately docking.

When the thrust assembly 20 pushes the electromagnetic chuck to reach the outer surface of the cover of the battery 71, the controller can control the battery 51 to supply power to the electromagnetic chuck, and the electromagnetic chuck can attract the battery 71. The controller may then request the thrust assembly 20 to pull the battery 71 onto the guide groove 52 in the device body 10. When the battery 71 is pulled to the set position of the guide groove 52, the controller controls the battery 51 to cut off power to the electromagnetic chuck. The electromagnetic chuck release the battery 71, and then the automatic battery swapping device sends the battery 71 to the charging station for charging, so as to realize the battery swapping operation of the automatic battery swapping device.

Of course, for those skilled in the art, other structures of AGV vehicles and their working principles can be realized, and will not be described in detail in this disclosure.

Although the embodiments of the present disclosure have been shown and described above, it can be understood that, the foregoing embodiments are exemplary and should not be understood as limitation to the present disclosure. A person of ordinary skill in the art can make changes, modifications, replacements, or variations to the foregoing embodiments within the scope of the present disclosure.

## Claims

1. An automatic battery swapping device, comprising:
a device body (10);
a thrust assembly (20), the thrust assembly (20) being arranged in the device body (10), the thrust assembly (20) being movable in the device body (10), the thrust assembly (20) comprising an attraction member (23), the attraction member (23) being capable of extending out of or retracting into the device body (10), and the attraction member (23) being configured to attract or release a battery (71) in the AGV;
a detection member (30), the detection member (30) being provided in the device body(10), and the detection member (30) being configured to detect a position of the attraction member (23) relative to the battery (71) in the AGV;
an adjustment assembly (40), the adjustment assembly (40) being movably arranged in the device body (10), and the adjustment assembly (40) being connected to the thrust assembly (20) to adjust the position of the attraction member (23) relative to the battery (71) in the AGV.

2. The automatic battery swapping device according to claim 1, wherein the attraction member (23) is switchable between a first position and a second position, the attraction member (23) extends out of the device body (10) when the attraction member (23) is in the first position, the attraction member (23) is configured to attract the battery (71) in the AGV; wherein the attraction member (23) is located in the device body (10) when the attraction member (23) is in the second position, the attraction member (23) is configured to release the adsorbed battery (71).

3. The automatic battery swapping device according to claim 1 or 2, wherein the thrust assembly (20) further comprises:
a first driving member (21), the first driving member (21) is arranged in the device body (10), and the first driving member (21) is connected to the adjustment assembly (40);
a push rod (22), one end of the push rod (22) is connected to the first driving member (21), and the other end of the push rod (22) is connected to the attraction member (23); the first driving member (21) drives the attraction member (23) through the push rod (22) switching between the first position and the second position.

4. The automatic battery swapping device according to any one of claims 1 to 3, further comprising: a battery (51), the battery (51) being arranged in the device body (10), the attraction member (23) being an electromagnetic chuck, the battery (51) powering the electromagnetic chuck and the electromagnetic chuck generating an adhesive force when the attraction member (23) is in the first position, and the battery (51) powering down the electromagnetic chuck and the electromagnetic chuck relieving the adhesive force when the attraction member (23) is in the second position.

5. The automatic battery swapping device according to any one of claims 1 to 4, wherein the adjustment assembly (40) comprises:
a first adjustment member (41), the first adjustment member (41) is connected to the thrust assembly (20), and the first adjustment member (41) is configured to adjusting the position of the attraction member (23) in a first direction;
a second adjustment member (42), the second adjustment member (42) is connected to the thrust assembly (20), and the second adjustment member (42) is configured to adjust the position of the attraction member (23) in a second direction, and the first direction is different from the second direction.

6. The automatic battery swapping device according to any one of claims 1 to 5, wherein the first adjustment member (41) comprises:
a second driving member (411);
a screw rod (412), the screw rod (412) is connected to the second driving member (411);
a guide rail (413), the guide rail (413) is arranged spaced apart and in parallel with the screw rod (412);
a sliding block (414), the sliding block (414) is slidably arranged on the guide rail (413), and the screw rod (412) gets through the sliding block (414), and the sliding block is connected to the thrust assembly (20).

7. The automatic battery swapping device according to any one of claims 1 to 6, wherein the guide rail (413) extends in a horizontal direction and the sliding block (414) slides in the horizontal direction relative to the guide rail (413) to adjust the position of the attraction member (23) in the horizontal direction.

8. The automatic battery swapping device according to any one of claims 1 to 7, wherein the first adjustment member (41) further comprises: a plurality of limiting members (415), both ends of the screw rod (412) are respectively provided with the limiting members (415), and both ends of the guide rail (413) are respectively provided with the limiting members (415).

9. The automatic battery swapping device according to any one of claims 1 to 8, wherein the first adjustment member (41) further comprises: a first encoder, the first encoder is provided in the guide rail (413) to measure the movement distance of the sliding block (414).

10. The automatic battery swapping device according to any one of claims 1 to 9, wherein the second adjustment member (42) comprises:
a third driving member (421);
a fourth driving member (422), the fourth driving member (422) and the third driving member (421) are arranged spaced apart in the second direction, and the fourth driving member (422) is connected to the thrust assembly (20);
a telescopic rod (423), the telescopic rod (423) is arranged between the third driving member (421) and the fourth driving member (422), the third driving member (421) drives the telescopic rod (423) to extend out in the second direction, and the fourth driving member (422) drives the telescopic rod (423) to retract in the second direction, so as to adjust the position of the thrust assembly (20) in the second direction.

11. The automatic battery swapping device according to any one of claims 1 to 10, wherein the third driving member (421) and the fourth driving member (422) are arranged spaced apart in a vertical direction, so as to adjust the position of the thrust assembly (20) in the vertical direction.

12. The automatic battery swapping device according to any one of claims 1 to 11, wherein the second adjustment member (42) further comprises: a second encoder (424), the second encoder (424) is a wire encoder, one end of the second encoder (424) is connected to the third driving member (421), and the other end of the second encoder (424) is connected to the fourth driving member (422), to measure the movement distance of the telescopic rod (423) in the second direction.

13. The automatic battery swapping device according to any one of claims 1 to 12, further comprising: a guide groove (52), the guide groove (52) being arranged in the device body (10), the extension direction of the guide groove (52) being the same as the moving direction of the attraction member (23), the guide groove (52) being configured to place the battery (71) in the AGV, and the battery (71) sliding in the guide groove (52) during the process of the attraction member (23) switching between the first position and the second position.

14. The automatic battery swapping device according to any one of claims 1 to 13, wherein a plurality of rollers (53) are provided in the guide groove (52), and the plurality of rollers (53) are arranged spaced apart in the extension direction of the guide groove (52).

15. The automatic battery swapping device according to any one of claims 1 to 14, further comprising: a controller, the controller being arranged in the device body (10), the controller being signal-connected to the detection member (30), the controller being signal-connected to the adjustment assembly (40).

16. An AGV vehicle, applied to the automatic battery swapping device as claimed in any one of claims 1-15, comprising:
a vehicle body (60);
a battery (71), the battery (71) being arranged in the vehicle body (60), and when the attraction member (23) is in the first position, the attraction member (23) extending out of the device body (10) and attracting the battery (71); when the attraction member (23) is in the second position, the attraction member (23) being located in the device body (10) and releasing the adsorbed battery (71);
a detection barcode (72), the detection barcode (72) being arranged on the outer wall surface of the battery (71), and the detection member (30) being configured to scan the detection barcode (72) to obtain a location information of the battery (71), and the automatic battery swapping device adjusting the position of the attraction member (23) according to the obtained location information of the battery (71).
